# EUROPEAN PATENT SPECIFICATION

(11) **EP 3 636 384 B1**
(45) Date of publication and mention of the grant of the patent: **21.04.2021**
(21) Application number: 19202584.9
(22) Date of filing: 10.10.2019
(51) Int. Cl.: B23Q 1/03, B23Q 1/01, B23Q 3/06

(54) **WORK CENTRE TO PROCESS SECTION BARS MADE OF ALUMINIUM LIGHT ALLOYS PVC OR THE LIKE**
BEARBEITUNGSZENTRUM FÜR PROFILE AUS ALUMINIUM, LEICHTEN LEGIERUNGEN ODER PVC
CENTRE D'USINAGE POUR PROFILÉS EN ALUMINIUM, ALLIAGES LÉGERS OU PVC.

(30) Priority: 10.10.2018 IT 201800009314
(43) Date of publication of application: 15.04.2020
(73) Proprietor: F.O.M. Industrie S.r.l., 47841 Cattolica (IT)
(72) Inventor: LATTANZI, Lorenzo, 61121 PESARO (PU) (IT)
(74) Representative: Manconi, Stefano

(56) References cited:
- EP-A1- 2 992 993
- EP-A2- 2 246 150
- DE-A1- 10 331 338

## Description

### TECHNICAL FIELD

The present invention relates to a work centre to process section bars made of aluminium, light alloys, PVC or the like, according to the preamble of claim 1 (see for example EP 2 246 150 A2).

### BACKGROUND ART

In the section bar processing field it is known to provide a work centre of the type comprising an elongated base provided with two longitudinal guide members parallel to a first substantially horizontal direction; a plurality of crosspieces, each of which is mounted on the base parallel to a second direction substantially horizontal and transverse to the first direction, is movable along the base in the first direction and supports at least one holding unit designed to retain at least one section bar; and an overhead crane, which extends above the base in the second direction, is provided with an operating head for processing (for example cutting and/or milling) the section bars and is movable along the base in the first direction. Each holding unit comprises a pair of jaws movable with respect to one another along the relative crosspiece in the second direction between a locking position and a release position of at least one section bar, and a support roller, which extends through the two jaws in the second direction, and defines, together with the other support rollers, a support surface for the section bar.

The crosspieces are moved along the base by a belt conveyor comprising a belt, which extends along one of the longitudinal guide members parallel to the first direction, and is wound about a pair of transmission pulleys mounted to rotate about respective rotation axes parallel to each other and perpendicular to the aforementioned first and second directions.

Each crosspiece is provided with a device for coupling the crosspiece to the belt, and with at least one device for locking the crosspiece on the base.

Known work centres of the type described above have some drawbacks mainly due to the fact that the belt conveyor is mounted along one of the longitudinal guide members, exerts on each crosspiece a non-barycentric force, and is therefore unable to guarantee a correct advancement of the crosspieces on the longitudinal guide members in the first direction.

### DISCLOSURE OF INVENTION

The object of the present invention is to provide a work centre to process section bars made of aluminium, light alloys, PVC or the like, which is free from the aforementioned drawbacks and which is simple and inexpensive to implement.

Therefore, the present invention provides a work centre to process section bars made of aluminium, light alloys, PVC or the like as claimed in the appended claims.

### BRIEF DESCRIPTION OF THE DRAWINGS

The present invention will now be described with reference to the annexed drawings showing a non-limiting embodiment, wherein:
Figure 1 is a schematic perspective view, with parts removed for clarity's sake, of a preferred embodiment of the work centre of the present invention;
Figures 2 and 3 are two schematic perspective views, with parts removed for clarity's sake, of a detail of the work centre of Figure 1 shown in two different operating positions; and
Figures 4, 5, 6, and 7 are four schematic perspective views, with parts removed for clarity's sake, of a detail of Figures 2 and 3.

### BEST MODE FOR CARRYING OUT THE INVENTION

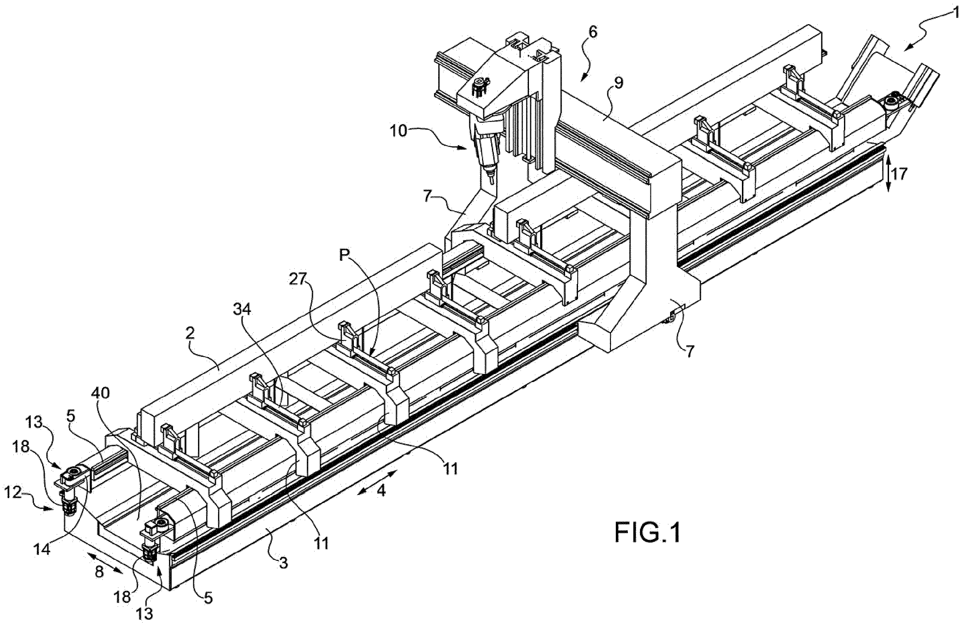

With reference to Figures 1, 2, and 3, the reference number 1 indicates, as a whole, a work centre to process section bars made of aluminium, light alloys, PVC or the like with an elongated shape.

The work centre 1 comprises an elongated base 3, which extends in a horizontal direction 4, is substantially U-shaped and is provided with two longitudinal guide members 5 parallel to the direction 4.

The work centre 1 further has an overhead crane 6 comprising a pair of vertical uprights 7, which are arranged on opposite sides of the base 3 in a horizontal direction 8 transverse to the direction 4, and are coupled in known manner to the base 3 to perform linear movements along the base 3 in the direction 4.

The two uprights 7 have a crosspiece 9 connected to their free ends, which extends above the base 3 in the direction 8 and supports an operating head 10 of a known type coupled in a known manner to the crosspiece 9 to perform linear movements along the crosspiece 9 in the direction 8.

The head 10 is configured to perform machining operations, such as milling and/or drilling and/or cutting, of section bars 2.

The work centre 1 further has a plurality of crosspieces 11, which extend between the longitudinal members 5 in the direction 8 and are slidably coupled to the longitudinal members 5 to be moved by an actuator device 12 along the longitudinal members 5 in the direction 4.

The device 12 comprises two belt conveyors 13 parallel to each other, which extend in the direction 4 and are mounted on opposite sides of the two longitudinal members 5 in the direction 8.

Each conveyor 13 comprises a belt 14 wound in a ring about a pair of transmission pulleys 15 mounted to rotate about respective rotation axes 16 parallel to each other and to a vertical direction 17 orthogonal to the directions 4 and 8. In the case shown in Figures 1, 2, and 3, each conveyor 13 is provided with an operating motor 18 designed to rotate the relative pulleys 15 about the axes 16.

According to a variant not shown, the device 12 comprises a single operating motor connected with the pulleys 15 of one of the conveyors 13 and a system for transmitting the motion to the pulleys 15 of the other conveyor 13. According to a further variant not shown, the belts 14 are removed and replaced with respective chains or ropes.

Each crosspiece 11 is provided with two fastening devices 19 movable between respective locking positions and respective release positions of the crosspiece 11 to the belts 14 and with two locking devices 20 movable between respective locking positions and respective release positions of the crosspiece 11 on the longitudinal members 5.

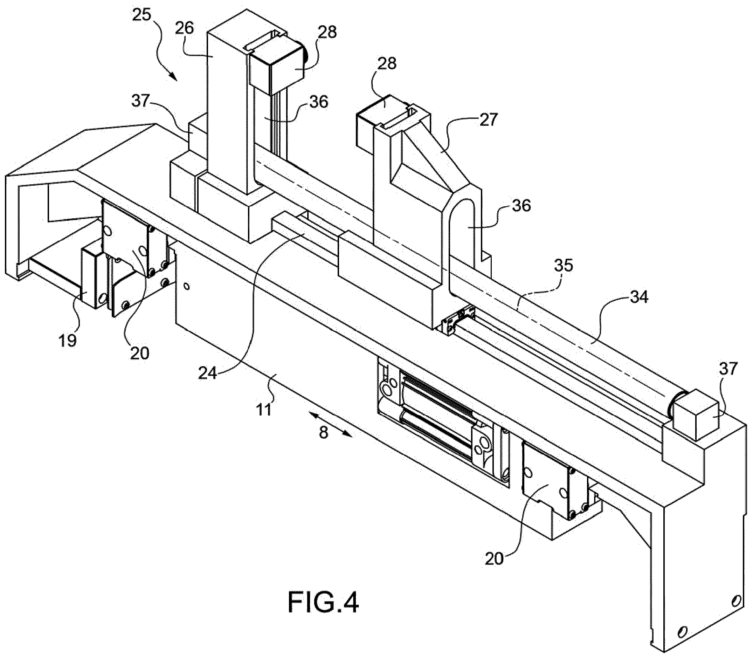

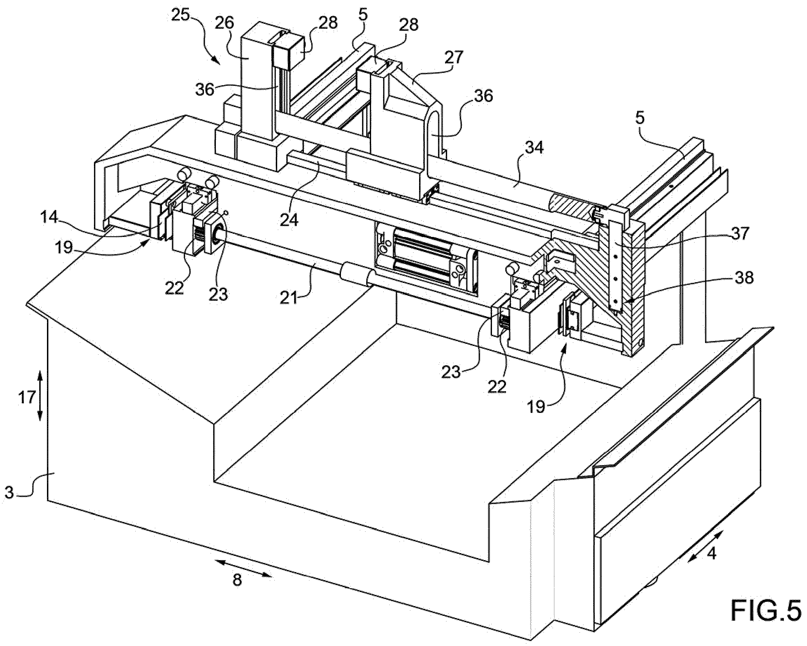

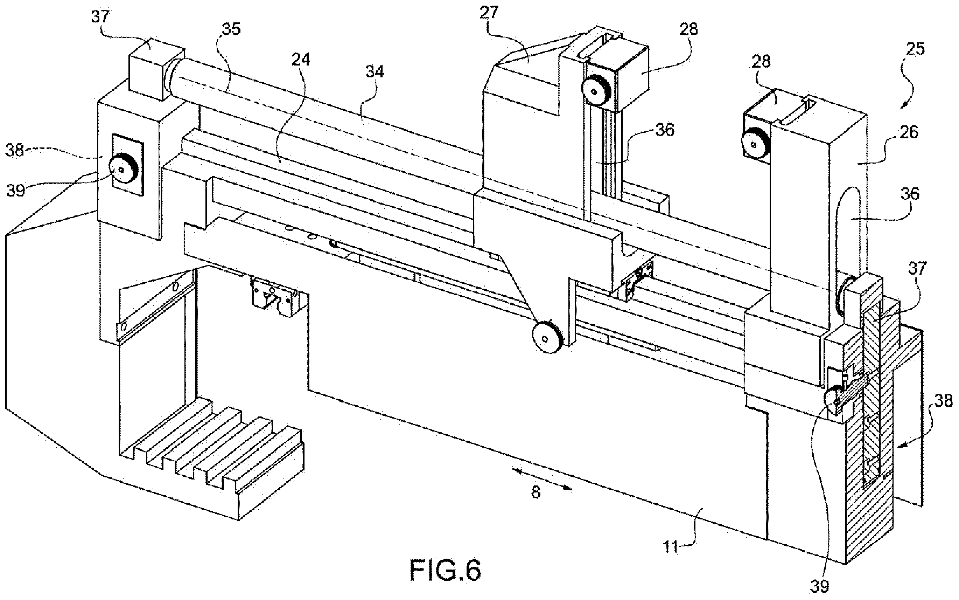

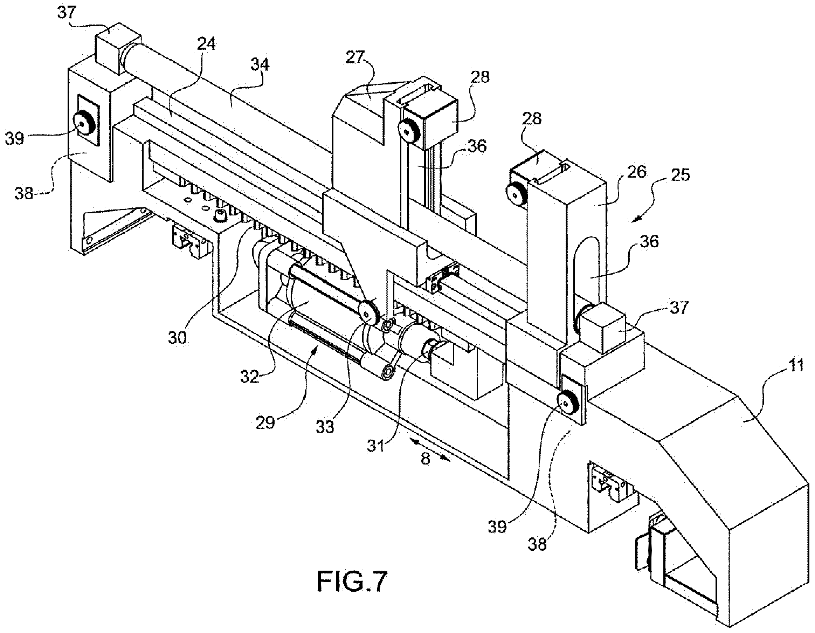

As shown in Figures 4 to 7, the correct position of each crosspiece 11 on the longitudinal members 5 is controlled by a torsion shaft 21, which is mounted on the crosspiece 11 parallel to the direction 8 and is rotatably coupled to the crosspiece 11 to rotate about a rotation axis parallel to the direction 8 with respect to the crosspiece 11.

The shaft 21 is provided with two gears 22, which are mounted on the free ends of the shaft 21 and are coupled with respective racks 23 fixed to the longitudinal members 5 parallel to the direction 4.

Each crosspiece 11 is provided with a rectilinear guide 24 fixed on an upper face of the crosspiece 11 parallel to the direction 8 and supports a clamping vise 25 comprising two gripping jaws 26, 27.

The jaws 26, 27 extend upwards from the crosspiece 11 in the direction 17, and each is provided with a respective pad 28 made of elastically deformable material, which faces the pad 28 of the other jaw 26, 27 and is slidably coupled to the jaw 26, 27 to be manually moved along the jaw 26, 27 in the direction 17.

In this case, the jaw 26 is fixed to a free end of the guide 24 and the jaw 27 is slidably coupled to the guide 24 to perform linear movements in the direction 8 between a locking position and a release position of a section bar 2. According to a variant not shown, each pad 28 is removed and replaced with a roller, which is mounted to rotate about a rotation axis parallel to the direction 17, and allows reducing the friction between the fixed jaw 26 and the section bar 2 when the movable jaw 27 is moved to its release position and the crosspiece 11 is moved along the base 3 in the direction 4.

The jaw 27 is moved along the guide 24 by an actuation device 29 comprising a rack 30, which extends along the crosspiece 11 in the direction 8, is slidably coupled to the crosspiece 11 and is connected to an output rod 31 of an actuator cylinder 32 fixed to the crosspiece 11 parallel to the direction 8.

The jaw 27 is locked on the rack 30 by means of a locking pin 33, whose disengagement from the rack 30 allows moving selectively the jaw 27 along the rack 30 in the direction 8.

Each vise 25 further comprises a support roller 34, which is mounted to rotate about a rotation axis 35 parallel to the direction 8, and defines, together with the rollers 34 of the other vises 25, a support surface P for a section bar 2.

The roller 34 extends through two slits 36 formed through the relative jaws 26, 27 in the direction 8, is substantially aligned with the relative guide 24 in the direction 17 and is rotatably coupled to the free ends of the exit rods 37 of two actuator cylinders 38 formed in the relative crosspiece 11.

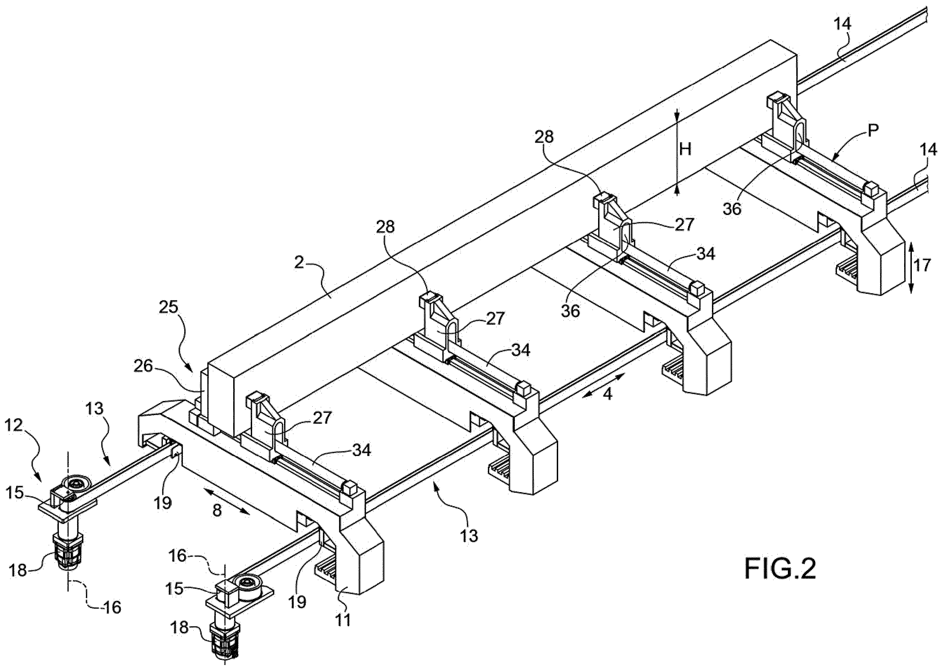

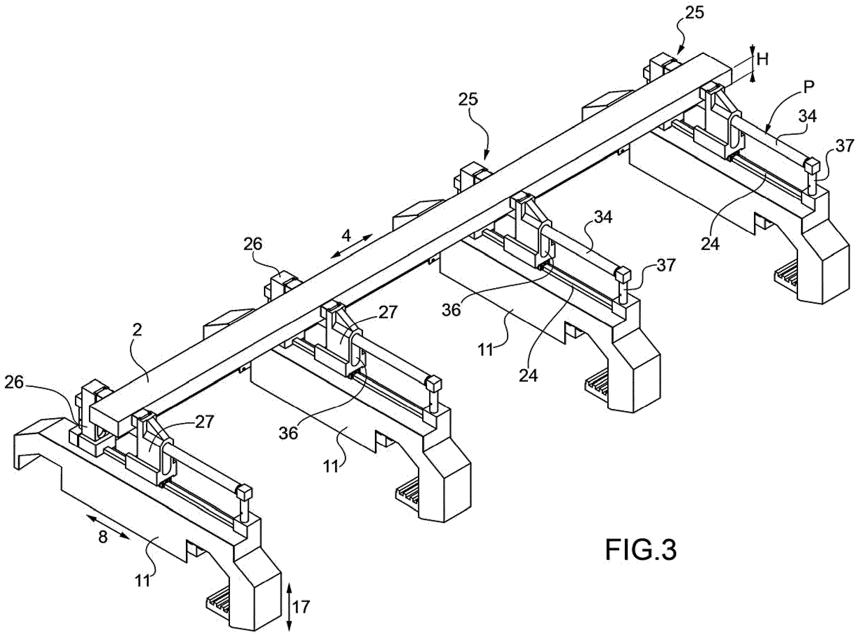

The roller 34 is moved by the cylinders 38 in the direction 17 between a lowered position (Figure 2) and a plurality of raised positions (one of which shown in Figure 3) based on a height H of the section bar 2 measured parallel to the direction 17.

Each rod 37 is locked in the lowered position and in the raised positions of the roller 34 by a locking pin 39, which extends through the crosspiece 11 in the direction 4, and is manually moved by an operator between a locking position and a release position of the rod 37.

According to a variant not shown, the cylinders 38 exert an upward thrust on the roller 34 equal to the weight force acting on the roller 34, which is manually moved in a relatively simple manner between its lowered position and its raised positions.

According to a further variant not shown, each roller 34 is removed and replaced with a support bar limited by a substantially flat upper face provided with a plurality of blowing holes connectable with a compressed-air pneumatic device.

The base 3 further supports a belt conveyor 40, which extends between the two longitudinal members 5 beneath the crosspieces 11 and is motorized to remove machining scraps and/or chips produced by the operating head 10 while processing the section bars 2.

The work centre 1 has some advantages mainly due to the fact that the presence of two belt conveyors 13 allows exerting on each crosspiece 11 a substantially barycentric thrust.

## Claims

1. A work centre to process section bars (2) made of aluminium, light alloys, PVC or the like comprising an elongated base (3) extending in a first direction (4); a plurality of crosspieces (11), each mounted on the base (3) parallel to a second direction (8) transverse to the first direction (4), movable along the base (3) in the first direction (4) and supporting at least one holding unit (25) designed to hold at least one section bar (2) made of aluminium, light alloys, PVC or the like; an actuator device (12) to move the crosspieces (11) along the base (3) in the first direction (4); and an overhead crane (6), which extends above the base (3) in the second direction (8), is provided with an operating head (10) to process the section bars (2) and is movable along the base (3) in the first direction (4); and **characterized in that** the actuator device (12) comprises two feeding conveyors (13), each mounted along the base (3) parallel to the first direction (4) and comprising a driving member (14) wound in a ring shape about at least one pair of pulleys (15); each crosspiece (11) being provided with two fastening devices (19) to fasten the crosspiece (11) to the feeding conveyors (13) .

2. A work centre according to claim 1, wherein each feeding conveyor (13) is provided with an operating motor (18) independent of the operating motor (18) of the other feeding conveyor (13).

3. A work centre according to claim 1, wherein the actuator device (12) further comprises one single operating motor (18) connected to a first feeding conveyor (13) and a transmission device to transmit the motion from the first feeding conveyor (13) to a second feeding conveyor (13).

4. A work centre according to any one of the preceding claims, wherein the base (3) is provided with a pair of longitudinal guide members (5) slidingly engaged by the crosspieces (11); the two feeding conveyors (13) being mounted on opposite sides of the longitudinal guide members (5) in the second direction (8).

5. A work centre according to any one of the preceding claims, wherein each crosspiece (11) is provided with a pair of locking devices (20) to lock the crosspiece (11) on the base (3).

6. A work centre according to any one of the preceding claims, wherein each crosspiece (11) is provided with a torsion shaft (21) rotatably coupled to the crosspiece (11) and provided with a pair of gears (22) engaged in respective racks (23) extending along the base (3) parallel to the first direction (4).

7. A work centre according to any one of the preceding claims, wherein each holding unit (25) comprises a pair of jaws (26, 27) movable relative to one another along the relative crosspiece (11) in the second direction (8) between a locking position and a release position of at least one section bar (2), and a support bar (34), which extends through at least one of the jaws (26, 27) in the second direction (8) and is configured to define a support surface (P) for the section bar (2).

8. A work centre according to claim 7, wherein the support bar (34) is mounted to move, relative to the two jaws (26, 27), in a third direction (17) orthogonal to said first and second direction (4, 8) and to the support surface (P).

9. A work centre according to claim 7 or 8, wherein the support bar (34) is limited by a substantially flat upper surface, which defines the support surface (P) and has a plurality of blowing holes connectable to a compressed-air pneumatic device.

10. A work centre according to claim 7 or 8, wherein the support bar (34) has a cylindrical shape and is mounted so as to rotate, relative to the two jaws (26, 27), about a rotation axis (35) parallel to the second direction (8).

11. A work centre according to any one of the claims from 7 to 10, wherein each jaw (26, 27) is provided with a pad (28) made of an elastically deformable material or with a feeding roller, which are arranged in contact with the section bars (2).

12. A work centre according to any one of the preceding claims, wherein the driving member (14) is defined by a belt or chain or rope.

## Patentansprüche

1. Ein Bearbeitungszentrum zur Bearbeitung von Profilstangen (2) aus Aluminium, Leichtmetalllegierungen, PVC oder dergleichen, das Folgendes umfasst: eine längliche Basis (3), die sich in einer ersten Richtung (4) erstreckt; eine Vielzahl von Traversen (11), die jeweils auf der Basis (3) parallel zu einer zweiten Richtung (8) quer zur ersten Richtung (4) montiert sind, entlang der Basis (3) in der ersten Richtung (4) bewegbar sind und mindestens eine Halteeinheit (25) tragen, die zum Halten mindestens einer Profilstange (2) aus Aluminium, Leichtmetall, PVC oder dergleichen ausgelegt ist; eine Betätigungsvorrichtung (12) zum Bewegen der Traversen (11) entlang der Basis (3) in der ersten Richtung (4); und einen Brückenkran (6), der sich oberhalb der Basis (3) in der zweiten Richtung (8) erstreckt, mit einem Betätigungskopf (10) zur Bearbeitung der Profilstangen (2) versehen ist und entlang der Basis (3) in der ersten Richtung (4) bewegbar ist; und **dadurch gekennzeichnet, dass** die Betätigungsvorrichtung (12) zwei Zuführförderer (13) umfasst, die jeweils entlang der Basis (3) parallel zur ersten Richtung (4) angebracht sind und ein Antriebselement (14) umfassen, das in einer Ringform um mindestens ein Paar von Riemenscheiben (*pulleys*) (15) gewickelt ist; wobei jede Traverse (11) mit zwei Befestigungsvorrichtungen (19) versehen ist, um die Traverse (11) an den Zuführförderern (13) zu befestigen.

2. Ein Bearbeitungszentrum nach Anspruch 1, wobei jeder Zuführförderer (13) mit einem Antriebsmotor (18) versehen ist, der unabhängig von dem Antriebsmotor (18) des anderen Zuführförderers (13) ist.

3. Ein Bearbeitungszentrum nach Anspruch 1, wobei die Betätigungsvorrichtung (12) ferner Folgendes umfasst: einen einzelnen Antriebsmotor (18), der mit einem ersten Zuführförderer (13) verbunden ist, und eine Übertragungsvorrichtung zur Übertragung der Bewegung vom ersten Zuführförderer (13) auf einen zweiten Zuführförderer (13).

4. Ein Bearbeitungszentrum nach irgendeinem der vorstehenden Ansprüche, wobei die Basis (3) mit einem Paar von Längsführungselementen (5) versehen ist, die gleitend mit den Traversen (11) in Eingriff stehen; wobei die zwei Zuführförderer (13) auf gegenüberliegenden Seiten der Längsführungselemente (5) in der zweiten Richtung (8) angebracht sind.

5. Ein Bearbeitungszentrum nach irgendeinem der vorstehenden Ansprüche, wobei jede Traverse (11) mit einem Paar von Verriegelungsvorrichtungen (20) versehen ist, um die Traverse (11) auf der Basis (3) zu verriegeln.

6. Ein Bearbeitungszentrum nach irgendeinem der vorstehenden Ansprüche, wobei jede Traverse (11) mit einer Torsionswelle (21) versehen ist, die drehbar mit der Traverse (11) gekoppelt ist, und mit einem Paar von Zahnrädern (22) versehen ist, die in entsprechende Zahnstangen (23) eingreifen, die sich parallel zur ersten Richtung (4) entlang der Basis (3) erstrecken.

7. Ein Bearbeitungszentrum nach irgendeinem der vorstehenden Ansprüche, wobei jede Halteeinheit (25) Folgendes umfasst: ein Paar von Backen (26, 27), die relativ zueinander entlang der jeweiligen Traverse (11) in der zweiten Richtung (8) zwischen einer Verriegelungsposition und einer Freigabeposition mindestens einer Profilstange (2) beweglich sind, und einen Stützbalken (34), der sich durch mindestens eine der Backen (26, 27) in der zweiten Richtung (8) erstreckt und so konfiguriert ist, dass er eine Stützfläche (P) für die Profilstange (2) definiert.

8. Ein Bearbeitungszentrum nach Anspruch 7, wobei der Stützbalken (34) so angebracht ist, dass er sich relativ zu den beiden Backen (26, 27) in einer dritten Richtung (17) bewegt, die orthogonal ist zur genannten ersten und zweiten Richtung (4, 8) und zur Stützfläche (P).

9. Ein Bearbeitungszentrum nach Anspruch 7 oder 8, wobei der Stützbalken (34) durch eine im Wesentlichen flache obere Fläche begrenzt ist, die die Stützfläche (P) definiert und eine Vielzahl von Blaslöchern aufweist, die mit einer pneumatischen Druckluftvorrichtung verbunden werden können.

10. Ein Bearbeitungszentrum nach Anspruch 7 oder 8, wobei der Stützbalken (34) eine zylindrische Form aufweist und so montiert ist, dass er sich relativ zu den beiden Backen (26, 27) um eine Drehachse (35) dreht, die zur zweiten Richtung (8) parallel ist.

11. Ein Bearbeitungszentrum nach irgendeinem der Ansprüche von 7 bis 10, wobei jede Backe (26, 27) mit einer Auflage bzw. einem Polster (*pad*) (28) aus einem elastisch verformbaren Material oder mit einer Vorschubrolle versehen ist, die in Kontakt mit den Profilstangen (2) angeordnet sind.

12. Ein Bearbeitungszentrum nach irgendeinem der vorstehenden Ansprüche, wobei das Antriebselement (14) durch einen Riemen oder eine Kette oder ein Seil definiert ist.

## Revendications

1. Centre d'usinage pour traiter des profilés (2) réalisés à partir d'aluminium, d'alliages légers, de PVC ou similaire comprenant une base allongée (3) s'étendant dans une première direction (4) ; une pluralité de traverses (11), chacune montée sur la base (3) parallèle à une deuxième direction (8) transversale par rapport à la première direction (4), mobile le long de la base (3) dans la première direction (4) et supportant au moins une unité de support (25) conçue pour supporter au moins un profilé (2) réalisé à partir d'aluminium, d'alliages légers, de PVC ou similaire ; un dispositif d'actionneur (12) pour déplacer les traverses (11) le long de la base (3) dans la première direction (4) ; et un pont roulant (6) qui s'étend au-dessus de la base (3) dans la deuxième direction (8), est prévu avec une tête opérationnelle (10) pour traiter les profilés (2) et est mobile le long de la base (3) dans la première direction (4) ; et **caractérisé en ce que** le dispositif d'actionneur (12) comprend deux transporteurs d'alimentation (13), chacun monté le long de la base (3) parallèle à la première direction (4) et comprenant un élément d'entraînement (14) enroulé en une forme annulaire autour d'au moins une paire de poulies (15) ; chaque traverse (11) étant prévue avec deux dispositifs de fixation (19) pour fixer la traverse (11) aux transporteurs d'alimentation (13) .

2. Centre d'usinage selon la revendication 1, dans lequel chaque transporteur d'alimentation (13) est prévu avec un moteur d'actionnement (18) indépendant du moteur d'actionnement (18) de l'autre transporteur d'alimentation (13).

3. Centre d'usinage selon la revendication 1, dans lequel le dispositif d'actionneur (12) comprend en outre un seul moteur d'actionnement (18) raccordé à un premier transporteur d'alimentation (13) et un dispositif de transmission pour transmettre le mouvement du premier transporteur d'alimentation (13) à un second transporteur d'alimentation (13).

4. Centre d'usinage selon l'une quelconque des revendications précédentes, dans lequel la base (3) est prévue avec une paire d'éléments de guidage longitudinaux (5) mis en prise, de manière coulissante, par les traverses (11) ; les deux transporteurs d'alimentation (13) étant montés sur les côtés opposés des éléments de guidage longitudinaux (5) dans la deuxième direction (8).

5. Centre d'usinage selon l'une quelconque des revendications précédentes, dans lequel chaque traverse (11) est prévue avec une paire de dispositifs de verrouillage (20) afin de verrouiller la traverse (11) sur la base (3).

6. Centre d'usinage selon l'une quelconque des revendications précédentes, dans lequel chaque traverse (11) est prévue avec un arbre de torsion (21) couplé, en rotation, à la traverse (11) et prévu avec une paire d'éléments dentés (22) mis en prise dans des crémaillères (23) respectives s'étendant le long de la base (3) parallèle à la première direction (4).

7. Centre d'usinage selon l'une quelconque des revendications précédentes, dans lequel chaque unité de support (25) comprend une paire de mâchoires (26, 27) mobiles l'une par rapport à l'autre le long de la traverse (11) relative dans la deuxième direction (8) entre une position de verrouillage et une position de libération d'au moins un profilé (2), et une barre de support (34) qui s'étend à travers au moins l'une des mâchoires (26, 27) dans la deuxième direction (8) et est configuré pour définir une surface de support (P) pour le profilé (2) .

8. Centre d'usinage selon la revendication 7, dans lequel la barre de support (34) est montée pour se déplacer, par rapport aux deux mâchoires (26, 27), dans une troisième direction (17) orthogonale par rapport auxdites première et deuxième directions (4, 8) et à la surface de support (P).

9. Centre d'usinage selon la revendication 7 ou 8, dans lequel la barre de support (34) est limitée par une surface supérieure sensiblement plate, qui définit la surface de support (P) et a une pluralité de trous de soufflage pouvant être raccordés à un dispositif pneumatique à air comprimé.

10. Centre d'usinage selon la revendication 7 ou 8, dans lequel la barre de support (34) a une forme cylindrique et est montée afin de tourner, par rapport aux deux mâchoires (26, 27), autour d'un axe de rotation (35) parallèle à la deuxième direction (8).

11. Centre d'usinage selon l'une quelconque des revendications 7 à 10, dans lequel chaque mâchoires (26, 27) est prévue avec un coussinet (28) réalisé avec un matériau élastiquement déformable ou avec un rouleau d'alimentation, qui sont agencés en contact avec les profilés (2).

12. Centre d'usinage selon l'une quelconque des revendications précédentes, dans lequel l'élément d'entraînement (14) est défini par une courroie ou une chaîne ou un câble.
